Europäisches Patentamt

European Patent Office

Office européen des brevets

(19)

(11) Veröffentlichungsnummer.

0 036 602
A2

## (12) EUROPÄISCHE PATENTANMELDUNG

(21) Anmeldenummer: 81101941.3

(22) Anmeldetag: 16.03.81

(51) Int. Cl.³: **H 01 G 9/04**

(30) Priorität: 26.03.80 DE 3011701

(43) Veröffentlichungstag der Anmeldung: 30.09.81
Patentblatt 81/39

(84) Benannte Vertragsstaaten: **FR GB SE**

(71) Anmelder: **SIEMENS AKTIENGESELLSCHAFT Berlin und München, Postfach 22 02 61, D-8000 München 22 (DE)**

(72) Erfinder: **Miklos, Jozef, Servo Mihaly 2, YU-21 220 Becej (YU)**
Erfinder: **Mund, Konrad, Dr., Langenbrucker Weg 10, D-8521 Uttenreuth (DE)**
Erfinder: **Naschwitz, Walter, Paul-Gossen-Strasse 105, D-8520 Erlangen (DE)**

(54) **Doppelschichtkondensator.**

(57) Die Erfindung betrifft einen Doppelschichtkondensator mit Elektroden aus aktiviertem Kohlenstoff und stellt sich die Aufgabe, einen derartigen Kondensator in der Weise auszugestalten, dass er ein kleines Volumen und ein geringes Gewicht bei gleichzeitig hoher Kapazität besitzt. Die Erfindung sieht dazu Elektroden vor, die aus mit oxidierenden Gasen aktiviertem Glaskohlenstoff bestehen. Der erfindungsgemässe Doppelschichtkondensator eignet sich insbesondere zur Erzeugung von hohen volumen- und massebezogenen Kapazitäten.

EP 0 036 602 A2

SIEMENS AKTIENGESELLSCHAFT
Berlin und München

Unser Zeichen
VPA 80 P 7519 E

## Doppelschichtkondensator

Die Erfindung betrifft einen Doppelschichtkondensator mit Elektroden aus aktiviertem Kohlenstoff.

Für elektronische Geräte werden - für Sieb- und Stützfunktionen - zunehmend Kondensatoren mit niedriger Nennspannung, $U < 15$ V, benötigt; dies ist eine Folge der Halbleitertechnologie. Weiter werden ein geringes Gewicht und ein kleines Volumen angestrebt. Diese Anforderungen können von den klassischen Aluminium- oder Tantal-Elektrolytkondensatoren nur bedingt erfüllt werden. Diese Kondensatoren werden hinsichtlich der volumenbezogenen Energiedichte vielmehr vor allem bei hohen Nennspannungen, $U > 40$ V, wirkungsvoll.

Doppelschichtkondensatoren, die zu den elektrochemischen Kondensatoren gehören, sind bekannt (DE-OS 19 21 610 und 20 31 798). Diese Kondensatoren eignen sich vor allem für niedrige Spannungen, weil das Einzelelement bei wäßrigem Elektrolyt, bedingt durch Korrosion und Gasentwicklung infolge der Zersetzung des Wassers, nur eine Spannung von etwa 1 V verträgt. Es ist auch bekannt, daß Kohlenstoff wegen seiner Korrosionsbeständigkeit ein gutes Elektrodenmaterial ist: Die Korrosion beginnt erst bei Potentialen positiver als $0,95$ V/$H_{2rev}$. Es wurde auch versucht, die Kapazität der Kohlenstoffelektroden dadurch zu vergrößern, daß man sie aktivierte und mit einer porösen Struktur versah. Diese Versuche waren jedoch nur wenig erfolgreich, da der Verlustfaktor hoch und die Kapazität - wegen des elektrolytischen Diaphragmenwiderstandes der dicken porösen Elektroden-

Bh 2 Koe / 24.3.1980

schichten - erst bei niedrigen Frequenzen von weniger als 50 mHz nutzbar war. Für technische Anwendungen ist aber ein Verlustfaktor tg $\delta$ = 1 bei Frequenzen von mehr als 10 Hz zu fordern. Ferner wird die Verwendung von Elektroden angestrebt, die zu einem Kondensator zusammengebaut werden können, der eine Nennspannung von einigen Volt erlaubt, wobei aber gleichzeitig eine hohe Kapazität erreicht werden soll.

Aufgabe der Erfindung ist es, einen Doppelschichtkondensator der eingangs genannten Art in der Weise auszugestalten, daß er ein kleines Volumen und ein geringes Gewicht bei gleichzeitig hoher Kapazität besitzt, wobei der Verlustfaktor bei Netzfrequenz nicht größer als tg $\delta$ = 1 sein soll.

Dies wird erfindungsgemäß dadurch erreicht, daß die Elektroden aus mit oxidierenden Gasen aktiviertem Glaskohlenstoff bestehen.

Die Aktivierung der Glaskohlenstoffelektroden erfolgt vorzugsweise entweder mit Luft bei einer Temperatur etwa zwischen 450 und 600°C oder mit Kohlendioxid bei einer Temperatur etwa zwischen 800 und 1200°C. Zur Aktivierung kann ferner Wasserdampf bei einer Temperatur etwa zwischen 800 und 900°C eingesetzt werden. Die Aktivierungsdauer beträgt vorteilhaft etwa zwischen 10 und 60 min.

Der erfindungsgemäße Doppelschichtkondensator weist im allgemeinen Glaskohlenstoffelektroden mit einer Dicke von etwa 1 mm und weniger auf. Die durch die Gasaktivierung erhaltene Aktivschicht dieser Elektroden beträgt etwa 10 $\mu$m, und trotz der hohen Kapazität von 0,4 F·cm$^{-2}$ der Einzelelektroden können damit Kondensatoren aufgebaut werden, die den Verlustfaktor tg $\delta$ = 1

bei 40 Hz erreichen. Diese Kondensatoren weisen darüber hinaus - bei einer Nennspannung von 10 V - lediglich ein Volumen von 18,5 $cm^3$ und ein Gewicht von 28 g auf; die erzielbare Kapazität beträgt etwa 0,12 F. Die Kondensatoren sind im übrigen ungepolt.

Die mit dem erfindungsgemäßen Doppelschichtkondensator erzielbaren Vorteile basieren im wesentlichen auf folgenden Merkmalen des Elektrodenmaterials bzw. der scheibenförmigen Elektroden:

1. Die Elektrodenscheiben sind gas- und flüssigkeitsdicht, so daß die Elektroden bipolar genutzt werden können, wenn die Elektrolyträume zwischen den Elektroden an der Peripherie abgedichtet werden. Aus n + 1 Elektroden wird dabei ein n-zelliger Kondensator erhalten, der eine Spannung von $n \cdot U_o$ ermöglicht, wobei $U_o$ die Zellspannung von ca. 0,95 V ist.

2. Die Elektrodenscheiben sind mechanisch stabil und können mit einer Dicke von weniger als 1 mm eingesetzt werden. Dadurch ergeben sich hohe volumen- bzw. gewichtsbezogene Kapazitäten.

3. Die Oberfläche des Glaskohlenstoffs hat eine Rauhigkeit von ca. 4 µm. Bei der Aktivierung mit oxidierenden Gasen, wie Luft oder Kohlendioxid ($CO_2$), wird dieser Wert lediglich verdoppelt. Dadurch ist es möglich, Kondensatoren mit sehr schmalen Elektrolyträumen aufzubauen, wobei die Elektrolyträume beispielsweise durch Asbestschichten mit einer Dicke von etwa 30 µm gebildet werden.

4. Durch die Gasaktivierung werden auf den Glaskohlenstoffelektroden dünne Schichten aus Aktivkohle mit einer BET-Oberfläche von mehr als 1000 $m^2/g$ und einer Kapazität von bis zu 0,4 $F \cdot cm^{-2}$ erzeugt. Diese Schicht bleibt in gutem elektronischen Zusammenhang mit dem unberührten, d.h. nicht aktivierten Glaskohlenstoff, und deshalb kann diese Kapazität auch voll genutzt werden.

Glaskohlenstoff entsteht, wenn vernetzte Kunstharze, insbesondere aus Phenolformaldehyd oder Furan, bei geringer zeitlicher Steigerung der Temperatur bis minimal 750°C pyrolysiert werden. Man kann auf diese Art beispielsweise Scheiben mit einer Dicke von 1 mm und einer Fläche von 30 x 30 $cm^2$ herstellen. Die Glaskohlenstoffscheiben haben dabei die für den erfindungsgemäßen Doppelschichtkondensator wesentliche Eigenschaft, daß sie gas- und flüssigkeitsdicht sind. Deshalb können die Scheiben auch gestapelt werden, indem zwischen benachbarten Elektroden der Elektrolytraum gebildet wird und die Ränder abgedichtet werden. Dabei entstehen zwischen den benachbarten Elektrolyträumen keine Flüssigkeitsbrücken. Auf diese Weise werden - ausgehend von n + 1 Scheiben - mehrzellige Kondensatoren mit einer Nennspannung von $n \cdot U_o$ erhalten, wobei $U_o$ die für das Einzelelement nutzbare Spannung ist. Die Elektroden werden also bipolar genutzt, und diese Vorzüge ergeben sich beim erfindungsgemäßen elektrochemischen Doppelschichtkondensator durch die Verwendung des Glaskohlenstoffs.

Zwei Merkmale sind für den erfindungsgemäßen Doppelschichtkondensator mit Glaskohlenstoffelektroden besonders wesentlich: Die ebenen Elektroden werden in dünner Schicht gasaktiviert, wobei die Dicke und die Art der Aktivierung wesentlich sind, und der Elektrolytraum wird, an die ebenen Elektroden besonders günstig anschließend, sehr schmal gestaltet; die Dicke der Aktivschicht soll dabei im allgemeinen nicht mehr als 20 $\mu$m betragen. Durch diese Merkmale wird ein günstiger Verlustfaktor bei hohen Frequenzen erzielt.

Der Verlustfaktor tg $\delta$ eines Kondensators ist immer
größer als der der Einzelelektroden, und dieser Unterschied ist durch den Widerstand der Elektrolytschicht
bedingt; hinzu kommt dann noch der Kontaktwiderstand der
Randelektroden. Die Aktivschicht der Elektroden hat eine
Rauhigkeit, und diese muß möglichst gering gehalten
werden, da die geringste Dicke des Elektrolytraums
zwischen den Elektroden kaum kleiner als die Tiefe der
Aufrauhung gestaltet werden kann. Hier kommen die Vorteile des Glaskohlenstoffs, verglichen mit konventionellen Kohlen, zum Ausdruck: Die glasartige Oberfläche der
Elektroden ergibt auch nach der Aktivierung eine samtartige feinstrukturierte Oberfläche.

Anhand von Beispielen soll die Erfindung noch näher
erläutert werden.

Eine genauere Untersuchung ergab, daß Glaskohlenstoffplatten eine Rauhigkeit von etwa 4 /um haben. Hinsichtlich der Gleichmäßigkeit der Aktivierung und der Größe
der flächenbezogenen Kapazität hat es sich nun als
günstig erwiesen - Verdoppelung der Kapazität -, die
Oberfläche des Glaskohlenstoffs - vor der Aktivierung -
mit feinem Material sandzustrahlen; dabei ist darauf zu
achten, daß ein milder Angriff erfolgt. Anschließend
werden die Scheiben dann gasaktiviert, beispielsweise im
Rohrofen bei Luftzutritt innerhalb von 30 min auf
500°C erhitzt und dort für 30 min belassen, bevor langsam wieder abgekühlt wird.

Überraschenderweise hat sich dabei ergeben, daß sich die
Rauhigkeit - als Folge der Aktivierung - lediglich verdoppelt und damit unterhalb von 10 /um bleibt. Dieser
Effekt ist wesentlich für den Verlustfaktor der Einzelelektrode. Eine große Rauhigkeit würde nämlich bedeuten,
daß bei hohen Frequenzen nur die Gipfel mit ihrer geringen Kapazität wirken, die Täler - infolge des Elektrolytwiderstandes - aber abgeschirmt bleiben; bei niedriger Frequenz entfällt dieser Effekt. Anzustreben ist, daß die Rauhigkeit der Elektroden nicht größer als die Dicke der Aktivschicht sein soll. Es hat sich nun herausgestellt, daß diese Bedingung bei der Aktivierung mit oxidierenden Gasen, wie Luft oder $CO_2$, erfüllt ist. Bei der Aktivierung mit konzentrierter Schwefelsäure bei Temperaturen bis zu ca. 330°C (deutsche Offenlegungsschrift 28 42 352) dagegen wird eine Rauhigkeit von 100 $\mu$m sowie eine schollenartige Struktur erhalten.

Für die Güte eines Kondensators sind vor allem die Eigenschaften der einzelnen Elektroden entscheidend. Die Kapazität der einzelnen Glaskohlenstoffelektroden kann in der üblichen elektrochemischen Halbzellenanordnung gemessen werden. Dabei wird das Ruhepotential der Elektrode im Elektrolyten bestimmt, dieser Wert an einem Potentiostaten eingestellt und der Elektrode ein Wechselspannungssignal mit einer Amplitude von 14 mV aufgeprägt. Mittels eines Frequenzganganalysators können dann der Betrag Z der Impedanz und der Phasenwinkel $\alpha$ sukzessiv für die Frequenzen zwischen $10^4$ und $10^{-4}$ Hz gemessen werden.

Die Impedanzmessungen an Einzelelektroden ergeben einen frequenzabhängigen Realteil, und dies bedeutet, daß das Verhalten der Elektroden nicht allein durch eine Kapazität der Doppelschicht gekennzeichnet werden kann. Diese Tatsache ergibt sich sowohl bei Messungen in 6 M KOH als Elektrolyt als auch in 2,5 M $H_2SO_4$. Berechnet man die flächenbezogene Kapazität c als Funktion der Frequenz $\nu$, so ergibt sich, daß c mit sinkender Frequenz wächst und daß die Kapazität in der Säure größer ist als in der Lauge.

Durch Messungen an Einzelelektroden kann auch der Einfluß der Aktivierung auf die Kapazität verdeutlicht werden. Der Einfachheit halber sei dabei die Kapazität für die Frequenz $\gamma$ = 1 Hz angegeben. Unbehandelter Glaskohlenstoff hat eine Kapazität von 5 $\mu F \cdot cm^{-2}$, und diese steigt auf 100 $\mu F \cdot cm^{-2}$, wenn der Glaskohlenstoff vorsichtig sandgestrahlt wird. Erfolgt dagegen eine Aktivierung bei 500°C mittels Luft (Dauer: 0,5 h), so ergibt sich eine Kapazität von etwa 0,2 $F \cdot cm^{-2}$. Wird die Temperatur auf 600°C erhöht und die Dauer der Aktivierung bei 0,5 h belassen, so verringert sich die Kapazität. Auch eine Verlängerung der Aktivierungszeit bei 500°C auf 2 h wirkt sich negativ aus. Wird zur Aktivierung anstelle von Luft $CO_2$ als Oxidationsmittel benutzt, so wird die Temperatur auf etwa 1000°C erhöht. Auch dabei werden für die Einzelelektroden Kapazitäten von ca. 0,2 $F \cdot cm^{-2}$ erreicht.

Der Aufbau mehrzelliger Kondensatoren erfolgt in der Weise, daß auf eine Endelektrode, die einseitig aktiviert und auf der anderen Seite kontaktiert ist, abwechselnd eine Asbestschicht und eine beidseitig aktivierte Glaskohlenstoffelektrode aufgelegt wird; den Abschluß bildet wieder eine kontaktierte, einseitig aktivierte Endelektrode. Ein einzelliger Kondensator enthält nur zwei Endelektroden und eine Asbestschicht. Zur Kontaktierung können beispielsweise an den Endelektroden befindliche Metallstifte dienen.

Der Stapel aus Elektroden- und Asbestschichten wird mittels einer Spannzange fixiert und am Rand - mit Ausnahme eines schmalen achsenparallelen Spalts - mit einem Kunststoffkleber, insbesondere einem Epoxidharz, bestrichen. Im Vakuum wird der Kondensator dann durch den Spalt mit Elektrolyt gefüllt und anschließend wird die Randöffnung verklebt. Um die Platten gegen mechani-

sche Angriffe zu schützen, wird der Kondensator zweckmäßigerweise noch mit Gießharz umhüllt, so daß nur die Kontakte frei zugänglich sind.

In der nachfolgenden Tabelle sind die charakteristischen Daten eines handelsüblichen Aluminium-Elektrolytkondensators und des erfindungsgemäßen elektrochemischen Doppelschichtkondensators einander gegenübergestellt. Der erfindungsgemäße Doppelschichtkondensator enthielt 13 Elektroden mit einer Fläche von 11 $cm^2$ und wurde bei einer maximalen Spannung von 10 V betrieben.

|  | Al-Elektrolyt-kondensator | Doppelschicht-kondensator |
|---|---|---|
| U, V | 7,5 | 10 |
| C, F | 0,3 | 0,12 |
| $0,5 \; CU^2$, Ws | 8,4 | 6,0 |
| V, $cm^3$ | 550 | 18,5 |
| G, g | 667 | 28 |
| $E_v$, Ws/$cm^3$ | 0,015 | 0,32 |
| $E_g$, Ws/g | 0,013 | 0,21 |
| $\gamma_1$, Hz | 46 | 40 |

Aus der Gegenüberstellung ergibt sich, daß der erfindungsgemäße Kondensator mit dem handelsüblichen Kondensator gut vergleichbar ist, da Spannung U, Kapazität C und die Frequenz $\gamma_1$ für tg $\delta$ = 1 nur wenig differieren. Der Tabelle ist aber auch zu entnehmen, daß der Doppelschichtkondensator dem Elektrolytkondensator hinsichtlich Volumen V und Gewicht G bzw. hinsichtlich der volumen- bzw. massebezogenen Energiedichte $E_v$ und $E_g$ deutlich überlegen ist.

4 Patentansprüche

Patentansprüche

1. Doppelschichtkondensator mit Elektroden aus aktiviertem Kohlenstoff, d a d u r c h   g e k e n n z e i c h n e t ,   daß die Elektroden aus mit oxidierenden Gasen aktiviertem Glaskohlenstoff bestehen.

2. Doppelschichtkondensator nach Anspruch 1, d a d u r c h   g e k e n n z e i c h n e t ,   daß die Elektroden mit Luft bei einer Temperatur etwa zwischen 450 und 600°C aktiviert sind.

3. Doppelschichtkondensator nach Anspruch 1, d a d u r c h   g e k e n n z e i c h n e t ,   daß die Elektroden mit Kohlendioxid bei einer Temperatur etwa zwischen 800 und 1200°C aktiviert sind.

4. Doppelschichtkondensator nach einem der Ansprüche 1 bis 3, d a d u r c h   g e k e n n z e i c h n e t , daß die Aktivierungsdauer etwa zwischen 10 und 60 min beträgt.